# EUROPEAN PATENT APPLICATION

(11) **EP 4 653 935 A1**
(43) Date of publication of application: **26.11.2025**
(21) Application number: 25177377.6
(22) Date of filing: 19.05.2025
(51) Int. Cl.: G02B 26/00, G02B 27/10

(54) **LASER PROJECTION DEVICE**

(30) Priority: 22.05.2024 CN 202421131015 U
(71) Applicant: Shenzhen Oceanwing Smart Innovations Technology Co., Ltd, Shenzhen, Guangdong (CN)
(72) Inventor: XIE, Yifeng, Shenzhen (CN)
(74) Representative: Steffens, Adrian

(57) **Abstract**

Disclosed is a laser projection device (10) which includes: a laser light source (100) configured to generate coherent light (110); a quantum mechanism (200) configured to convert the coherent light (110) into incoherent light and including a red quantum unit (210), a blue quantum unit (220) and a green quantum unit (230) configured to receive the coherent light (110) at different times, in which particle sizes of quantum dots (242) included in the red quantum unit (210), the blue quantum unit (220) and the green quantum unit (230) are different; and a shaping mechanism (300) configured to transmit the incoherent light from the red quantum unit (210), the blue quantum unit (220) and the green quantum unit (230) in a same direction. The red quantum unit (210), the blue quantum unit (220) and the green quantum unit (230) receive the coherent light (110) at different times and convert the coherent light (110) into incoherent light under the action of the quantum dots (242), which can effectively avoid interference generated by the coherent light (110), thereby reducing speckles occurring on the image formed by the laser projection device (10), and finally improving speckle eliminating performance of the laser projection device (10).

## Description

### Field

The present disclosure relates to the technical field of laser projection, in particular to a laser projection device.

### Background

A laser projection device performs projection with lasers of three primary colors of red, green and blue as a light source, which can truly reproduce rich and gorgeous colors of the objective world and provide more shocking expressive force. From the perspective of colorimetry, color gamut coverage of laser display can reach more than 90% of a color space that human eyes can recognize, which is more than twice color gamut coverage of traditional display, so that people can see the most true and beautiful world through a display terminal. However, for a laser projection device in the related art, speckles are prone to occur due to interference, and the presence of speckles will ultimately affect an imaging effect of the laser projection device.

### Summary

A technical problem solved by the disclosure is how to improve speckle eliminating performance of a laser projection device. The problem is solved by the laser projection device according to claim 1. The dependent claims refer to further embodiments.

A laser projection device including:
a laser light source configured to generate coherent light;
a quantum mechanism configured to convert the coherent light into incoherent light and including a red quantum unit, a blue quantum unit and a green quantum unit configured to receive the coherent light at different times, in which particle sizes of quantum dots included in the red quantum unit, the blue quantum unit and the green quantum unit are different; and
a shaping mechanism configured to transmit the incoherent light from the red quantum unit, the blue quantum unit and the green quantum unit in a same direction.

In an embodiment, the laser projection device further includes a reflecting mirror which receives the coherent light and is capable of rotating, wherein the quantum mechanism is fixed; and/or when the reflecting mirror rotates, the reflecting mirror transmits the coherent light to the red quantum unit, the blue quantum unit, and the green quantum unit at different times separately.

In an embodiment, during rotation, the reflecting mirror is a plane mirror and is disposed at an acute angle with the coherent light, and/or the reflecting mirror reflects the coherent light at a first position to form a first light ray, and/or at a second position to form a second light ray, and/or at a third position to form a third light ray. In an embodiment, the first light ray is perpendicular to the coherent light, and/or the second light ray and the third light ray are located at opposite sides of the first light ray respectively, and/or included angles of the second light ray and the third light ray with the first light ray are equal.

In an embodiment, the green quantum unit receives the first light ray, and/or one of the blue quantum unit and the red quantum unit receives the second light ray, and/or the other of the blue quantum unit and the red quantum unit receives the third light ray.

In an embodiment, the red quantum unit, the blue quantum unit and the green quantum unit are arranged along a straight line parallel to the coherent light between the reflecting mirror and the laser light source, and/or the green quantum unit is located between the red quantum unit and the blue quantum unit.

In an embodiment, at least one of or each of the following is provided: the red quantum unit, the reflecting mirror is a plane mirror, and at a first position, the reflecting mirror is perpendicular to the coherent light and transmits the coherent light to form a first light ray; at a second position, the reflecting mirror is at an acute angle with the coherent light and reflects the coherent light to form a second light ray; and at a third position, the reflecting mirror is at an acute angle with the coherent light and reflects the coherent light to form a third light ray; the reflecting mirror at the second position is perpendicular to the reflecting mirror at the third position, transmission directions of the first light ray and the coherent light are same, and transmission directions of the second light ray and the third light ray are opposite and perpendicular to the coherent light between the reflecting mirror and the laser light source.

In an embodiment, at least one of or each of the following is provided: the green quantum unit is perpendicular to the coherent light and receives the first light ray, the red quantum unit and the blue quantum unit are located at opposite sides of the coherent light, one of the red quantum unit and the blue quantum unit receives the second light ray, and the other of the red quantum unit and the blue quantum unit receives the third light ray.

In an embodiment, the laser projection device further includes a first reflector, a second reflector, a third reflector and a fourth reflector. In an embodiment, at least one of or each of the following is provided: the first reflector and the fourth reflector are parallel to the reflecting mirror at the second position, and the second reflector and the third reflector are parallel to the reflecting mirror at the third position; the second light ray passing through the quantum mechanism is reflected by the first reflector and the second reflector in turn to form a light ray parallel to and having the same transmission direction with the third light ray, and the third light ray passing through the quantum mechanism is reflected by the third reflector and the fourth reflector in turn to form a light ray parallel to and having the same transmission direction with the second light ray.

In an embodiment, the quantum mechanism is capable of moving in a straight line perpendicular to the coherent light, and the red quantum unit, the blue quantum unit and the green quantum unit are arranged in a straight line perpendicular to the coherent light, and/or when the quantum mechanism moves, the coherent light is transmitted to the red quantum unit, the blue quantum unit and the green quantum unit at different times.

In an embodiment, the laser projection device further includes an elastic member, one end of which is fixedly connected, and the other end of which is connected with the quantum mechanism.

In an embodiment, at least one of or each of the following is satisfied:
the red quantum unit, the blue quantum unit and the green quantum unit are integrally connected or spliced with each other when arranged along a straight line;
the red quantum unit, the blue quantum unit and the green quantum unit each further comprise a housing, and the quantum dots are uniformly distributed within the housing;
particle sizes of the quantum dots in the red quantum unit range from 2.5 nm to 3.5 nm, particle sizes of the quantum dots in the green quantum unit range from 1 nm to 2 nm, and particle sizes of the quantum dots in the blue quantum unit range from 0.5 nm to 1.5 nm;
the laser projection device further comprises an imaging element configured to receive a light ray from the shaping mechanism for imaging;
the coherent light is blue laser or ultraviolet laser; and
the incoherent lights passing through the red quantum unit, the blue quantum unit and the green quantum unit are parallel to each other or located in a same straight line after passing through the shaping mechanism.

A technical effect of an embodiment of the disclosure is: the red quantum unit, the blue quantum unit and the green quantum unit receive the coherent light at different times and convert the coherent light into incoherent light under the action of the quantum dots, which can effectively avoid interference generated by the coherent light, thereby reducing speckles occurring on the image formed by the laser projection device, and finally improving speckle eliminating performance of the laser projection device.

### Brief Description of the Drawings

- FIG. 1: is a planar structure diagram of a laser projection device according to an embodiment.
- FIG. 2: is a planar structure diagram of a laser projection device according to another embodiment.
- FIG. 3: is a planar structure diagram of a laser projection device according to yet another embodiment.

Reference numerals: laser projection device 10, laser light source 100, coherent light 110, quantum mechanism 200, red quantum unit 210, blue quantum unit 220, green quantum unit 230, housing 241, quantum dot 242, shaping mechanism 300, reflecting mirror 400, first light ray 401, second light ray 402, third light ray 403, first position 410, second position 420, third position 430, first reflector 510, second reflector 520, third reflector 530, fourth reflector 540, elastic member 600, imaging element 700.

### Detailed Description

In order to make the above objects, features and advantages of the present disclosure more obvious and easier to understand, specific embodiments of the present disclosure will be described in detail with reference to the drawings. Numerous specific details are set forth in the following description to thoroughly understand the present disclosure. However, the present disclosure can be implemented in many other ways different from those described herein, similar improvements can be made by those skilled in the art without departing from the spirit of the present disclosure, and thus the present disclosure is not limited by specific embodiments to be disclosed below.

In description of the disclosure, it should be understood that orientation or position relationships indicated by the terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientation or position relationships shown in the drawings, which are only for the convenience of describing the disclosure and simplifying the description, and do not indicate or imply that the referred device or element must have a specific orientation and be constructed and operated in a specific orientation, and thus cannot be understood as a limit of the disclosure.

In addition, the terms "first", "second" and "third" herein are used for a descriptive purpose only and are not to be construed as indicating or implying the relative importance or implicitly indicating the number of indicated technical features. Thus, features defined with "first" and "second" may explicitly or implicitly include at least one of such features. In the description of the present disclosure, "a plurality of" means at least two, for example, two, three, and so on, unless otherwise explicitly and specifically defined herein.

In the present disclosure, terms such as "mount", "communicate", "connect", and "fix" should be understood broadly unless expressly specified or defined. For example, the terms may refer to fixed connection, detachable connection, or integration; may refer to mechanical connection or electrical connection; may refer to direct connection, indirect connection via an intermediary, or internal communication or interaction relationship between two elements, unless expressly defined. Specific meanings of the above terms in the present disclosure may be understood by those of ordinary skill in the art in light of specific circumstances.

In the present disclosure, unless otherwise explicitly specified and defined, if a first feature is described as "above" or "below" a second feature, it may mean that the first and second features are in direct contact or in indirect contact through an intermediary. Furthermore, the first feature being "above", "upon" and "on" the second feature may be the first feature being directly above or obliquely above the second feature, or simply mean that the first feature is higher than the second feature in the horizontal height. Furthermore, the first feature being "below", "beneath" and "under" the second feature may be the first feature being directly below or obliquely below the second feature, or simply mean that the first feature is lower than the second feature in the horizontal height.

It should be noted that if an element is referred to as "fixed to" or "disposed on" another element, it may be directly on the other element or a middle element may be present. If an element is considered to be "connected" to another element, it may be directly connected to the other element or a middle element may be present. If present, the terms "vertical", "horizontal", "upper", "lower", "left", "right" and similar expressions used herein are for the purpose of description only and are not intended to be the only embodiments.

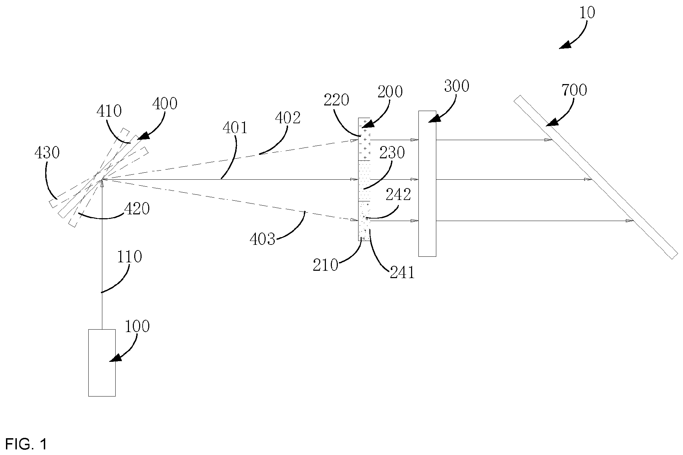

Referring to FIG. 1, a laser projection device 10 provided in an embodiment of the present disclosure includes a laser light source 100, a quantum mechanism 200 and a shaping mechanism 300. The laser light source 100 is configured to generate coherent light 110, the quantum mechanism 200 is configured to convert the coherent light 110 into incoherent light, and the shaping mechanism 300 is configured to integrate the incoherent light from the quantum mechanism 200, so that the shaping mechanism 300 transmits the incoherent light in a same direction. The incoherent light from the shaping mechanism 300 may be received by an imaging element 700 for image display. Since light passing through the quantum mechanism 200 is the incoherent light, interference generated by the coherent light 110 can be effectively avoided, thereby reducing speckles occurring on the imaging element 700, and finally improving speckle eliminating performance of the laser projection device 10.

Referring to FIG. 1, in some embodiments, the laser light source 100 generates the coherent light 110, which may be a blue laser or an ultraviolet laser. The quantum mechanism 200 includes a red quantum unit 210, a blue quantum unit 220 and a green quantum unit 230. The red quantum unit 210, the blue quantum unit 220 and the green quantum unit 230 may all be flat in shape. For example, the red quantum unit 210, the blue quantum unit 220 and the green quantum unit 230 can be arranged along a straight line, so that the red quantum unit 210, the blue quantum unit 220 and the green quantum unit 230 can be spliced or integrally connected with each other. As another example, the red quantum unit 210, the blue quantum unit 220 and the green quantum unit 230 may not be arranged along a straight line, and are discrete and located in different positions.

Referring to FIG. 1, the red quantum unit 210, the blue quantum unit 220 and the green quantum unit 230 each may include a housing 241 and granular quantum dots 242, and the quantum dots 242 may be uniformly distributed within the housing 241, so that the housing 241 houses the quantum dots 242. The housing 241 can be made of glass and has high temperature resistance. Particle sizes of the quantum dots 242 in the red quantum unit 210, the blue quantum unit 220 and the green quantum unit 230 are different, and the particle sizes can be understood as diameters of the quantum dots 242. Particle sizes of quantum dots 242 in the red quantum unit 210 range from 2.5 nm to 3.5 nm, and may specifically be 3 nm, for example. Under the action of the quantum dots 242, the coherent light 110 passing through the red quantum unit 210 can be converted into red incoherent light with a full width at half maximum of less than 30 nm. Particle sizes of quantum dots 242 in the green quantum unit 230 range from 1.5 nm 2 nm, and may specifically be 1.5 nm, for example. Under the action of the quantum dots 242, the coherent light 110 passing through the green quantum unit 230 can be converted into green incoherent light with a full width at half maximum of less than 30 nm. Particle sizes of quantum dots 242 in the blue quantum unit 220 range from 1.5 nm 2 nm, and may specifically be 1 nm, for example. Under the action of the quantum dots 242, the coherent light 110 passing through the blue quantum unit 220 can be converted into blue incoherent light with a full width at half maximum of less than 30 nm. Due to the small full width at half maximum, color gamut of the incoherent light can be reasonably improved, thereby improving clarity and fidelity of an image of the laser projection device 10.

Referring to FIG. 1, in some embodiments, the laser projection device 10 further includes a reflecting mirror 400, which can be a flat plane mirror and can rotate around a fixed axis. The red quantum unit 210, the blue quantum unit 220 and the green quantum unit 230 are fixed. When the reflecting mirror 400 rotates to different positions, the reflecting mirror 400 transmits the coherent light 110 to the red quantum unit 210, the blue quantum unit 220 and the green quantum unit 230 at different times. Rotation of the reflecting mirror 400 can be realized by a stepper motor, so that rotation accuracy of the reflecting mirror 400 can be improved.

Referring to FIG. 1, for example, during rotation, the reflecting mirror 400 is disposed at an acute angle with the coherent light 110, and the reflecting mirror 400 may be at a first position 410, a second position 420 and a third position 430. When the reflecting mirror 400 is located at the first position 410, the coherent light 110 is reflected by the reflecting mirror 400 to form a first light ray 401, and the first light ray 401 is perpendicular to the coherent light 110, in which case an incident angle of the coherent light 110 is 45°. When the reflecting mirror 400 is located at the second position 420, the coherent light 110 is reflected by the reflecting mirror 400 to form a second light ray 402, in which case an incident angle of the coherent light 110 is greater than 45°. When the reflecting mirror 400 is located at the third position 430, the coherent light 110 is reflected by the reflecting mirror 400 to form a third light ray 403, in which case an incident angle of the coherent light 110 is less than 45°. The second light ray 402 and the third light ray 403 are located at opposite sides of the first light ray 401, and included angles formed by the second light ray 402 and the third light ray 403 with the first light ray 401 are equal. Obviously, the included angles are acute angles. When the reflecting mirror 400 rotates, the reflecting mirror 400 can first rotate from the third position 430 to the first position 410, and then from the first position 410 to the second position 420, that is, the reflecting mirror 400 rotates counterclockwise. Alternatively, the reflecting mirror 400 may first rotate from the second position 420 to the first position 410, and then rotate from the first position 410 to the third position 430, that is, the reflecting mirror 400 rotates clockwise.

Referring to FIG. 1, the red quantum unit 210, the blue quantum unit 220 and the green quantum unit 230 can be arranged along a straight line parallel to the coherent light 110, and the green quantum unit 230 is located between the red quantum unit 210 and the blue quantum unit 220, that is, the green quantum unit 230 is disposed in the middle. Of course, the red quantum unit 210 or the blue quantum unit 220 can also be disposed in the middle. The green quantum unit 230 receives the first light ray 401, which can be converted into green incoherent light after passing through the green quantum unit 230. One of the blue quantum unit 220 and the red quantum unit 210 receives the second light ray 402, and the other of the blue quantum unit 220 and the red quantum unit 210 receives the third light ray 403. For example, the blue quantum unit 220 receives the second light ray 402, which is converted into blue incoherent light after passing through the blue quantum unit 220; and the red quantum unit 210 receives the third light ray 403, which is converted into red incoherent light after passing through the red quantum unit 210. Of course, the red quantum unit 210 can receive the second light ray 402, and the blue quantum unit 220 can receive the third light ray 403.

Referring to FIG. 1, the shaping mechanism 300 can be a special optical element. When light rays from the red quantum unit 210, the blue quantum unit 220 and the green quantum unit 230 reach the shaping mechanism 300, the shaping mechanism 300 adjust propagation directions of the red, blue and green incoherent lights, so that the incoherent lights of the three colors are parallel to each other and have a same transmission direction, and thus the incoherent lights of the three colors reach the imaging element 700 as parallel light for image display.

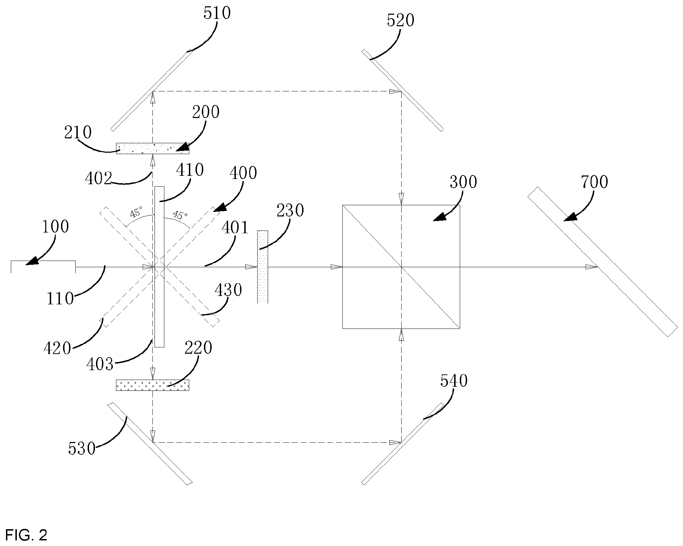

Referring to FIG. 2, as another example, during the rotation, the reflecting mirror 400 may be disposed at an acute angle with the coherent light 110 or perpendicular to the coherent light 110. The reflecting mirror 400 may also be at the first position 410, the second position 420 and the third position 430. At the first position 410, the reflecting mirror 400 is perpendicular to the coherent light 110. in which case an incident angle of the coherent light 110 is 0°, so that the coherent light 110 can pass through the reflecting mirror 400 in an original direction to form the first light ray 401, that is, the reflecting mirror 400 can transmit the coherent light 110. At the second position 420, the reflecting mirror 400 is at an acute angle with the coherent light 110, in which case an incident angle of the coherent light 110 is 45°, so that the coherent light 110 is reflected by the reflecting mirror 400 to form a second light ray 402, and the second light ray 402 is perpendicular to the coherent light 110. At the third position 430, the reflecting mirror 400 is at an acute angle with the coherent light 110, in which case an incident angle of the coherent light 110 is 45°, so that the coherent light 110 is reflected by the reflecting mirror 400 to form a third light ray 403, and the third light ray 403 is perpendicular to the coherent light 110. Transmission directions of the second light ray 402 and the third light ray 403 are opposite to each other and located in a same straight line, the first light ray 401 and the coherent light 110 have a same transmission direction and located in a same straight line, the second light ray 402 and the third light ray 403 are respectively located at opposite sides of the coherent light 110, and the reflecting mirror 400 at the second position 420 and the reflecting mirror 400 at the first position 410 are perpendicular to each other. When the reflecting mirror 400 rotates, the reflecting mirror 400 can first rotate from the third position 430 to the first position 410, and then from the first position 410 to the second position 420, that is, the reflecting mirror 400 rotates clockwise. Alternatively, the reflecting mirror 400 may first rotate from the second position 420 to the first position 410, and then rotate from the first position 410 to the third position 430, that is, the reflecting mirror 400 rotates counterclockwise.

Referring to FIG. 2, the green quantum unit 230 can be perpendicular to the coherent light 110, the green quantum unit 230 receives the first light ray 401, which can be converted into green incoherent light after passing through the green quantum unit 230. The red quantum unit 210 can be parallel to the coherent light 110, and the red quantum unit 210 receives the second light ray 402, which can be converted into red incoherent light after passing through the red quantum unit 210. The blue quantum unit 220 can be parallel to the coherent light 110, and the blue quantum unit 220 receives the third light ray 403, which can be converted into blue incoherent light after passing through the blue quantum unit 220. The blue quantum unit 220 and the red quantum unit 210 may be located at opposite sides of the coherent light 110. Of course, the red quantum unit 210 can receive any one of the first light ray 401, the second light ray 402 and the third light ray 403, the green quantum unit 230 can receive any one of the first light ray 401, the second light ray 402 and the third light ray 403, and the blue quantum unit 220 can receive any one of the first light ray 401, the second light ray 402 and the third light ray 403.

Referring to FIG. 2, the laser projection device 10 may further include a first reflector 510, a second reflector 520, a third reflector 530 and a fourth reflector 540. The first reflector 510 and the second reflector 520 are located at one side of the coherent light 110, and the first reflector 510 and the second reflector 520 are arranged at an interval along a transmission direction of the coherent light 110. The third reflector 530 and the fourth reflector 540 are located at the other side of the coherent light 110, and the third reflector 530 and the fourth reflector 540 are arranged at an interval along the transmission direction of the coherent light 110. The first reflector 510 and the fourth reflector 540 are parallel to the reflecting mirror 400 at the second position 420, and the second reflector 520 and the third reflector 530 are parallel to the reflecting mirror 400 at the third position 430. The red incoherent light generated by the second light ray 402 passing through the red quantum unit 210 travels along a transmission direction of the second light ray 402. The red incoherent light is first reflected by the first reflector 510 at an incident angle of 45°, and the red incoherent light reflected by the first reflector 510 is parallel to the coherent light 110 and has a same transmission direction as the coherent light 110. The red incoherent light reflected by the first reflector 510 is reflected again by the second reflector 520 at an incident angle of 45°, so that the red incoherent light reflected by the second reflector 520 is parallel to the third light ray 403 and has a same transmission direction as the third light ray. The blue incoherent light generated by the third light ray 403 passing through the blue quantum unit 220 travels along a transmission direction of the third light ray 403. The blue incoherent light reflected by the third reflector 530 at an incident angle of 45° is parallel to the coherent light 110 and has a same transmission direction as the coherent light 110. The blue incoherent light reflected by the third reflector 530 is reflected again by the fourth reflector 540 at an incident angle of 45°, so that the red incoherent light reflected by the fourth reflector 540 is parallel to the second light ray 402 and has a same transmission direction as the second light ray. The green incoherent light generated by the green quantum unit 230 and the coherent light 110 are in a same straight line and have a same transmission direction.

Referring to FIG. 2, the shaping mechanism 300 can be a special prism combining element, and with reflection of light rays by the first reflector 510, the second reflector 520, the third reflector 530 and the fourth reflector 540, light rays from the red quantum unit 210, the blue quantum unit 220 and the green quantum unit 230 can reach the shaping mechanism 300 in different directions respectively. The shaping mechanism 300 can adjust propagation directions of the red, blue and green incoherent light, so that the incoherent lights of the three colors are located in the same straight line and have a same transmission direction, and thus the incoherent lights of the three colors arrive at the imaging element 700 along the same straight line for image display.

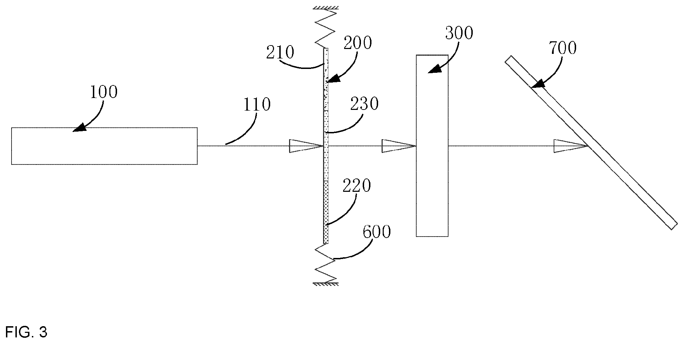

Referring to FIG. 3, in some embodiments, the quantum mechanism 200 can move in a straight line perpendicular to the coherent light 110, the red quantum unit 210, the blue quantum unit 220 and the green quantum unit 230 are arranged in a straight line perpendicular to the coherent light 110, and the green quantum unit 230 can be centrally disposed. When the quantum mechanism 200 moves in a straight line, the coherent light 110 is transmitted to the red quantum unit 210, the blue quantum unit 220 and the green quantum unit 230 at different times. For example, when the whole quantum mechanism 200 is located at an upper side of the coherent light 110, the quantum mechanism 200 can be moved downward. During downward movement of the quantum mechanism 200, the coherent light 110 first passes through the blue quantum unit 220, then through the green quantum unit 230 and finally through the red quantum unit 210. As another example, when the whole quantum mechanism 200 is located at a lower side of the coherent light 110, the quantum mechanism 200 can be moved upward. During upward movement of the quantum mechanism 200, the coherent light 110 first passes through the red quantum unit 210, then through the green quantum unit 230, and finally through the blue quantum unit 220.

Referring to FIG. 3, the shaping mechanism 300 can be a special optical element. When light rays from the red quantum unit 210, the blue quantum unit 220 and the green quantum unit 230 reach the shaping mechanism 300 separately, the shaping mechanism 300 adjust propagation directions of the red, blue and green incoherent light, so that the incoherent lights of the three colors are located in a same straight line and have a same propagation direction, and thus the incoherent lights of the three colors reach the imaging element 700 along the same straight line for image display.

Referring to FIG. 3, the laser projection device 10 may further include an elastic member 600, one end of which is fixedly connected, and the other end of which is connected with the quantum mechanism 200. There may be two elastic members 600 which are located at two ends of the quantum mechanism 200 respectively, and the elastic member 600 may be a spring or the like. By providing the elastic member 600, on one hand, movement of the quantum mechanism 200 can be buffered, and on the other hand, a restoring force can be generated on the quantum mechanism 200 to play a restoring role.

Referring to FIG. 1, FIG. 2 and FIG. 3, the laser projection device 10 may further include an imaging element 700. When the incoherent light from the shaping mechanism 300 reaches the imaging element 700, the light can be imaged to display an image. The red quantum unit 210, the blue quantum unit 220 and the green quantum unit 230 receive the coherent light at different times and convert the coherent light 110 into incoherent light under the action of the quantum dots 242, which can effectively avoid interference generated by the coherent light 110 on the imaging element 700, thereby reducing speckles occurring on the imaging element 700, and finally improving speckle eliminating performance of the laser projection device 10.

The technical features of the above-mentioned embodiments can be combined arbitrarily. For brevity of description, not all possible combinations of the technical features in the above embodiments are described. However, as long as there is no contradiction between these combinations of the technical features, the combinations should be considered as falling within the scope of the specification.

The embodiments described above represent only several embodiments of the present disclosure, which are described in detail but should not be construed as limitations of the scope of the disclosure. It should be noted that several variations and improvements can be made within the scope of the present disclosure. Accordingly, the scope of the present disclosure should be subject to the appended claims.

## Claims

1. A laser projection device (10) comprising:
- a laser light source (100) configured to generate coherent light (110);
- a quantum mechanism (200) configured to convert the coherent light (110) into incoherent light and comprising a red quantum unit (210), a blue quantum unit (220) and a green quantum unit (230) configured to receive the coherent light (110) at different times, wherein particle sizes of quantum dots (242) included in the red quantum unit (210), the blue quantum unit (220) and the green quantum unit (230) are different; and
- a shaping mechanism (300) configured to transmit the incoherent light from the red quantum unit (210), the blue quantum unit (220) and the green quantum unit (230) in a same direction.

2. The laser projection device (10) according to claim 1, further comprising a reflecting mirror (400) which receives the coherent light (110) and is capable of rotating, wherein:
- the quantum mechanism (200) is fixed; and
- when the reflecting mirror (400) rotates, the reflecting mirror (400) transmits the coherent light (110) to the red quantum unit (210), the blue quantum unit (220), and the green quantum unit (230) at different times separately.

3. The laser projection device (10) according to claim 2, wherein:
- during rotation, the reflecting mirror (400) is a plane mirror and is disposed at an acute angle with the coherent light (110), and the reflecting mirror (400) reflects the coherent light (110) at a first position (410) to form a first light ray (401), at a second position (420) to form a second light ray (402), and at a third position (430) to form a third light ray (403),
- the first light ray (401) is perpendicular to the coherent light (110),
- the second light ray (402) and the third light ray (403) are located at opposite sides of the first light ray (401) respectively, and
- included angles of the second light ray (402) and the third light ray (403) with the first light ray (401) are equal.

4. The laser projection device (10) according to claim 3, wherein:
- the green quantum unit (230) receives the first light ray (401),
- one of the blue quantum unit (220) and the red quantum unit (210) receives the second light ray (402), and
- the other of the blue quantum unit (220) and the red quantum unit (210) receives the third light ray (403).

5. The laser projection device (10) according to any one of claims 2 to 4, wherein:
- the red quantum unit (210), the blue quantum unit (220) and the green quantum unit (230) are arranged along a straight line parallel to the coherent light (110) between the reflecting mirror (400) and the laser light source (100), and
- the green quantum unit (230) is located between the red quantum unit (210) and the blue quantum unit (220).

6. The laser projection device (10) according to any one of claims 2 to 5, wherein:
- the reflecting mirror (400) is a plane mirror, and at a first position (410), the reflecting mirror (400) is perpendicular to the coherent light (110) and transmits the coherent light (110) to form a first light ray (401);
- at a second position (420), the reflecting mirror (400) is at an acute angle with the coherent light (110) and reflects the coherent light (110) to form a second light ray (402);
- and at a third position (430), the reflecting mirror (400) is at an acute angle with the coherent light (110) and reflects the coherent light (110) to form a third light ray (403); and
- the reflecting mirror (400) at the second position (420) is perpendicular to the reflecting mirror (400) at the third position (430), transmission directions of the first light ray (401) and the coherent light (110) are same, and transmission directions of the second light ray (402) and the third light ray (403) are opposite and perpendicular to the coherent light (110) between the reflecting mirror (400) and the laser light source (100).

7. The laser projection device (10) according to claim 6, wherein:
- the green quantum unit (230) is perpendicular to the coherent light (110) and receives the first light ray (401),
- the red quantum unit (210) and the blue quantum unit (220) are located at opposite sides of the coherent light (110),
- one of the red quantum unit (210) and the blue quantum unit (220) receives the second light ray (402), and
- the other of the red quantum unit (210) and the blue quantum unit (220) receives the third light ray (403).

8. The laser projection device (10) according to claim 7, further comprising a first reflector (510), a second reflector (520), a third reflector (530) and a fourth reflector (540), wherein the first reflector (510) and the fourth reflector (540) are parallel to the reflecting mirror (400) at the second position (420), and the second reflector (520) and the third reflector (530) are parallel to the reflecting mirror (400) at the third position (430).

9. The laser projection device (10) according to claim 8, wherein:
- the second light ray (402) passing through the quantum mechanism (200) is reflected by the first reflector (510) and the second reflector (520) in turn to form a light ray parallel to and having the same transmission direction with the third light ray (403), and
- the third light ray (403) passing through the quantum mechanism (200) is reflected by the third reflector (530) and the fourth reflector (540) in turn to form a light ray parallel to and having the same transmission direction with the second light ray (402).

10. The laser projection device (10) according to any one of the preceding claims, wherein:
- the quantum mechanism (200) is capable of moving in a straight line perpendicular to the coherent light (110), and the red quantum unit (210), the blue quantum unit (220) and the green quantum unit (230) are arranged in a straight line perpendicular to the coherent light (110), and
- when the quantum mechanism moves, the coherent light (110) is transmitted to the red quantum unit (210), the blue quantum unit (220) and the green quantum unit (230) at different times.

11. The laser projection device (10) according to claim 10, further comprising an elastic member (600), one end of which is fixedly connected, and the other end of which is connected with the quantum mechanism (200).

12. The laser projection device (10) according to any one of the preceding claims, wherein at least one of the following is satisfied:
- the red quantum unit (210), the blue quantum unit (220) and the green quantum unit (230) are integrally connected or spliced with each other when arranged along a straight line; and
- the red quantum unit (210), the blue quantum unit (220) and the green quantum unit (230) each further comprise a housing (241), and the quantum dots (242) are uniformly distributed within the housing (241).

13. The laser projection device (10) according to any one of the preceding claims, wherein:
- particle sizes of the quantum dots (242) in a red quantum unit range from 2.5 nm to 3.5 nm,
- particle sizes of the quantum dots (242) in a green quantum unit range from 1 nm to 2 nm, and
- particle sizes of the quantum dots (242) in a blue quantum unit range from 0.5 nm to 1.5 nm.

14. The laser projection device (10) according to any one of the preceding claims, wherein:
- the laser projection device (10) further comprises an imaging element (700) configured to receive a light ray from the shaping mechanism (300) for imaging.

15. The laser projection device (10) according to any one of the preceding claims, wherein at least one of the following is satisfied:
- the coherent light (110) is blue laser or ultraviolet laser; and
- the incoherent lights passing through the red quantum unit (210), the blue quantum unit (220) and the green quantum unit (230) are parallel to each other or are located in a same straight line after passing through the shaping mechanism (300).
